# EUROPEAN PATENT APPLICATION

(11) **EP 4 083 419 A1**
(43) Date of publication of application: **02.11.2022**
(21) Application number: 21382365.1
(22) Date of filing: 27.04.2021
(51) Int. Cl.: F03D 7/02, F03D 17/00, F03D 7/04

(54) **COMPUTER-IMPLEMENTED METHOD FOR CALIBRATING WIND TURBINES IN A WIND FARM**

(71) Applicant: Siemens Gamesa Renewable Energy Innovation & Technology S.L., 31621 Sarriguren (Navarra) (ES)
(72) Inventor: Suarez Aizpun, Jaime, 28027 Madrid (ES); Bas Quesada, Jesus, 28043 Madrid (ES); Moral Gonzalez, Carlos, 28029 Madrid (ES); Palou Larranaga, Felipe, 31003 Pamplona (ES); Pena Martinez, Juan Jose, 36380 Gondomar (ES); Pizarro De La Fuente, Carlos, 28045 Madrid (ES)
(74) Representative: SGRE-Association

(57) **Abstract**

The invention relates to a computer-implemented method (100) for calibrating a nacelle position of at least one wind turbine (1, 2, 3, 4, 5) in a wind farm (10) having a plurality of spatially distributed wind
turbines (1, 2, 3, 4, 5).

## Description

The invention relates to a computer-implemented method for calibrating a nacelle position of at least one wind turbine in a wind farm, a system comprising means for carrying out the method, a computer program associated with the computer-implemented method and a computer-readable medium associated with the computer program.

Different methods for calibrating wind turbines in wind farms are known in the state of the art. One known method is to stop the wind turbine to be calibrated and point it to known locations in order to calibrate it using trigonometry. Another known method is to use a compass in the wind turbine to be calibrated. In both of these methods, the wind turbine must be stopped.

The calibration of the wind turbines in the wind farm should be as exact as possible because the actual wind direction is very important in wake steering control operations for improving the annual energy production of the wind farm. That is, since wind turbines generate electricity from energy contained in the wind, the wind behind the wind turbines has less energy content than the wind in front of the wind turbines. In other words, wind turbines always cast a wind shadow on the downstream side. This results in wakes behind the wind turbines, which are turbulent wind tails with a lower wind speed compared to the wind in front of the wind turbines. The wakes cause a lower power production efficiency of the wind turbines affected by it. As the flow of the wind proceeds downstream, there is a spreading of the wake and the wake may recover towards free stream conditions.

The aggregated influence on the energy production of the wind farm, which results from the changes in wind speed caused by the impact of the wind turbines on each other, is often referred to as the so-called wake effect. It is important to consider wake effects from neighboring wind turbines within the same wind farm or due to nearby other wind farms.

In wind farms, individual wind turbines are distributed spatially with a certain distance from one another to reduce turbulence on the leeward side. Also, wind farms are typically spatially distributed with a certain distance from one another. However, wake effects still occur. There is one predominantly used technique or, in other words, control operation for mitigating the effect of wakes on the annual energy production of a wind farm. It aims at reducing the wake effect in a wind farm. The above-mentioned wake steering control operation is performed by a wind turbine in front of the wind for a given wind direction. The wind turbines in front of the wind may also be referred to as the upstream wind turbines, whereas wind turbines downstream of the upstream wind turbine may be referred to as downstream wind turbines. In the wake steering control operation, the upstream wind turbine is angled towards the prevailing wind direction or, in other words, a yaw misalignment of the upstream wind turbine is forced so as to steer the wake away from a downstream wind turbine. Thereby, the downstream wind turbine may become not or less effected by the wake and its power production efficiency may be improved.

However, in complex terrain, wakes can follow a trajectory different from one in flat terrains and this should be taken into account when controlling the wind turbines. In the known methods for calibrating wind turbines, an influence from orography is not accounted for and the wake steering control operations in wind turbines calibrated by the above methods may be inefficient because the wake steering control operation is performed on false calibration or, in other words, nacelle position data of the wind turbine.

Accordingly, it is an object of the invention to provide a method for calibrating wind turbines in a wind farm, which does not have the above disadvantages, in particular does not need stopping of the wind turbines and delivers precise calibration.

This object is solved by the subject-matter of the claims. In particular, the object is solved by a computer-implemented method for calibrating a nacelle position of at least one wind turbine in a wind farm having a plurality of spatially distributed wind turbines according to claim 1, a system according to claim 12, a computer program according to claim 14 and a computer-readable medium according to claim 15. Further details of the invention unfold from the other claims as well as the description and the drawings. Thereby, the features and details described in connection with the computer-implemented method for calibrating a nacelle position of at least one wind turbine in a wind farm having a plurality of spatially distributed wind turbines of the invention apply in connection with the system of the invention, the computer program of the invention and the computer-readable medium of the invention so that regarding the disclosure of the individual aspects of the invention it is or can be referred to one another.

According to a first aspect of the invention, the object is solved by a computer-implemented method for calibrating a nacelle position of at least one wind turbine in a wind farm having a plurality of spatially distributed wind turbines. The method comprises the following steps:
- determining at least one upstream wind turbine and at least one downstream wind turbine of the wind farm, the at least one upstream wind turbine having a wake effect on the at least one downstream wind turbine for different wind directions of a wind impinging the at least one upstream wind turbine,
- computing at least one computed set of power ratios between the at least one downstream wind turbine and the at least one upstream wind turbine for different wind directions,
- identifying at least one wind direction mismatch by comparing at least one power ratio minimum and/or at least one power ratio maximum in the at least one computed set of power ratios with at least one power ratio minimum and/or at least one power ratio maximum in at least one predetermined set of power ratios for the at least one upstream wind turbine and the at least one downstream wind turbine, and
- recalibrating a precalibrated nacelle position of at least one wind turbine to be calibrated, the at least one wind turbine to be calibrated being from the at least one downstream wind turbine and the at least one upstream wind turbine, whereby the recalibration is based on the identified at least one wind direction mismatch to obtain a calibrated nacelle position of the at least one wind turbine to be calibrated.

At least one or all of the steps of the computer-implemented method may be executed on one or multiple computers. The same or different computers may be used for the different steps of the method. The steps may be performed in the listed order.

The method uses the wording of at least one device or value to make clear that a single device, e.g., a wind turbine, or a single value, e.g., a wind direction mismatch, are sufficient to carry out the calibration method. However, typically, there will be multiple devices, e.g., wind turbines, and multiple values, e.g., wind direction mismatches, to make the best use of the method for calibrating nacelle positions of multiple or all wind turbines in a wind farm and make use of multiple or all the available, determinable, identifiable or computable wind turbines or values to achieve the greatest level of precision for the calibration.

In the determination step of the method, it is determined which of the wind turbines in the wind farms are located upstream and which of the wind turbines are located downstream for different wind directions. An upstream wind turbine is defined as being the one to be first impinged by a wind of a given wind direction, thereby not being exposed to wake. A downstream wind turbine is defined as being the one to be impinged by wind from an upstream wind turbine and thereby experiencing wake. Of course, wind turbines may be both, located upstream and downstream of the wind and other wind turbines in the wind farm, depending on the observed wind directions of the wind for that particular wind farm. In the determination step, different wind directions are considered. The different wind directions may be the range of wind directions observed at the particular wind farm for which the method is being executed. Thereby, the entirety of the available field data may be used in the method to get the most precise calibration of the nacelle position of the at least one wind turbine.

In the computing step of the method, at least one computed set of power ratios for different wind directions is computed. In particular, the entirety of wind directions from 0° to 360° or the narrower range of the wind directions observed at the particular wind farm for which the method is carried out may be used. The power ratio is defined as a ratio of the power generated by one wind turbine to the power generated by another wind turbine of the wind farm. The power ratios or set of power ratios computed in the computing step are power ratios of a power generated by one downstream wind turbine to a power generated by one upstream wind turbine or the other way around. Accordingly, the computed set of power ratios are based on actual field data for the different wind directions that are observed at the wind farm. The generated power from the field data may be measured at the respective wind turbines or the power grid, for example. The set of power ratios contains more than one power ratio. The set of power ratios may in particular be a continuous or quasi-continuous set of data of the power ratios as a function of or depending on the wind directions. For each two wind turbines having wake interactions with each other, the set of power ratios may be computed. Accordingly, there may be multiple computed set of power ratios for different upstream wind turbines and downstream wind turbines the generated power of which are set in relation with each other.

In the identification step of the method, wind direction mismatches are identified based on the computed set of power ratios and a predetermined set of power ratios. In particular, power ratio minima and power ratio maxima in the computed set of power ratios for two wind turbines, one of them being upstream and the other one being downstream, are compared with power ratio minima and power ratio maxima in the predetermined set of power ratios for the same two wind turbines. The power ratio minima and power ratio maxima at certain wind directions occur due to the wake of the upstream wind turbine impinging the downstream wind turbine and thereby reducing the power generated by the downstream wind turbine compared to the upstream wind turbine.

The predetermined set of power ratios is estimated to be more or less accurate. The computed set of power ratios on the other hand may be close to the predetermined set of power ratios or far away from the predetermined set of power ratios depending on the accuracy of the nacelle position of the wind turbines. If the wind turbines are poorly calibrated, meaning that they have significantly false nacelle positions, the computed set of power ratios will show power ratio minima and power ratio maxima at different wind directions than the predetermined set of power ratios does. Comparing the power ratio minima and power ratio maxima of the different sets of power ratio delivers an individual wind direction mismatch for each one of the power ratio minima and power ratio maxima. The wind direction mismatch is the difference in wind direction (measurable in degrees) between the power ratio minima or maxima due to the same wake between the predetermined set of power ratios and the computed set of power ratios.

In the recalibration step, a precalibrated nacelle position of the at least one wind turbine to be calibrated is recalibrated. This means that an initial or precalibrated nacelle position, which may be roughly calibrated, of the at least one wind turbine, which is from the upstream and downstream wind turbines determined in the determination step, is refined. The recalibration may be based on the identified wind direction mismatches between the at least one wind turbine to be calibrated and all the other wind turbines in the wind farm having wake interactions at certain wind directions, i.e., being upstream or downstream wind turbines as determined in the determination step. The wind direction mismatches represent errors in the precalibrated nacelle position of the at least one wind turbine to be calibrated, located by means of comparing the location in terms of wind direction of the power ratio minima and maxima due to the wake interactions. These wind direction mismatches are being used to obtain a calibrated nacelle position of the at least one wind turbine to be calibrated.

Accordingly, the invention provides for a computer-implemented calibration method capable of recalibrating poorly precalibrated nacelle positions of wind turbines by means of determining their wake interactions with each other and the power ratios resulting therefrom. A stopping of the wind turbine to be calibrated is not necessary as in the state of the art. Also, the method can handle wind farms on complex terrain, because the method is based on determining wake interactions and the influence from orography is thereby accounted for.

The at least one computed set of power ratios and/or the at least one predetermined set of power ratios may be determined as a function of a range of the different wind directions. The computed and/or predetermined set of power ratios may be continuous or quasi-continuous. In other words, the set of power ratios may be continuously or quasi-continuously computed or predetermined data. The identification step may thereby be executed with a full or near-full set of field data and predetermined data. The function may be visualized by a graph.

In particular, the at least one predetermined set of power ratios may be based on a simulation or model. The simulation may be performed during carrying out the method according to the first aspect of the invention or upfront. For the simulation, a simulation model of the wind farm may be used. Upfront means that the simulation has been performed prior to the calibration method and the simulation data, in particular the at least one predetermined set of power ratios, may be taken from a database stored in a storage medium. This has significant benefits with respect to calculation time, and such simulation may be performed on a different computer than the one being used to execute the calibration method. Accordingly, a cost-effective computer may be chosen for executing the calibration method by outsourcing the simulation to a more capable computer.

It may be provided that several wind direction mismatches are identified. Accordingly, several power ratio minima and/or power ratio maxima in the at least one computed set of power ratios are compared with several power ratio minima and power ratio maxima in the at least one predetermined set of power ratios. In other words, several different wakes are considered for identifying the wind direction mismatches. This enables higher accuracy for the calibration compared to considering only a single wake or few wakes, where due to orography effects in complex terrain the accuracy may be poor.

A measure of central tendency may be calculated from the several wind direction mismatches. The precalibrated nacelle position of the at least one wind turbine to be calibrated may be recalibrated based on the computed measure of central tendency to obtain the calibrated nacelle position of the at least one wind turbine to be calibrated. Thereby, several wind direction mismatches may be used in a simple calculation manner to get a more precise calibration of the nacelle positions of the at least one wind turbine.

As a measure of central tendency, a median value or mean value may be computed. These measures of central tendency have shown good results for the calibration of the nacelle positions of the wind turbines to be calibrated.

The method may further comprise calibrating a wind direction dependent nacelle position of the at least one wind turbine to be calibrated for a given wind direction. This may be done by carrying out the following steps:
- identifying at least one further wind direction mismatch by comparing at least one power ratio at the given wind direction in the at least one computed set of power ratios with at least one power ratio at the given wind direction in the at least one predetermined set of power ratios,
- adding the identified further wind direction mismatch to the calibrated nacelle position of the at least one wind turbine to be calibrated, thereby obtaining the wind direction dependent nacelle position of the at least one wind turbine to be calibrated.
The idea behind this further calibration is that the calibration based on the wind direction mismatches calculated from the power ratio maxima and minima delivers a good result for the nacelle position of the wind turbine, which may be very close to the actual nacelle position. However, there may still be some significant deviation. By including the wind direction mismatch at the particular wind direction into the calibration, a nacelle position specific for that wind direction or depending from that wind direction may be obtained, which comes even closer to the actual nacelle position.

Further, it may be provided that the at least one power ratio for the given wind direction is located between a power ratio minimum and a power ratio maximum of the computed set of power ratios and an interpolation is performed for identifying the further wind direction mismatch. The interpolation is performed between the power ratio minima and maxima to achieve a more precise wind direction dependent nacelle position.

Moreover, the method may further comprise a step or steps of precalibrating the nacelle position of the at least one wind turbine to be calibrated based on a precalibrated nacelle position of at least one precalibrated wind turbine of the wind farm.

The precalibration of the nacelle position of the at least one wind turbine to be calibrated may have the steps of:
- determining a raw nacelle position of the at least one wind turbine to be calibrated,
- determining a precalibrated nacelle position of at least one precalibrated wind turbine of the wind farm,
- computing a correction for the raw nacelle position of the at least one wind turbine to be calibrated based on the precalibrated nacelle position of the at least one precalibrated wind turbine, and
- applying the computed correction to the raw nacelle position of the at least one wind turbine to be calibrated such that the precalibrated nacelle position of the at least one wind turbine to be calibrated is obtained.
The precalibration may be performed by trigonometry, using a compass or using wind farm data to detect a specific wake, for example, and does not need to be very accurate.

The at least one power ratio maximum and/or the at least one power ratio minimum in the at least one computed set of power ratios and/or the at least one predetermined set of power ratios may be of a magnitude (or, in other words, prominence) of at least 0.1, in particular of at least 0.2, from an adjacent minimum and/or maximum of the at least one computed set of power ratios and/or the at least one predetermined set of power ratios. The magnitude or prominence is a defined threshold, in particular in both, field data and simulation data. Thereby, the power ratio minima and maxima may be preselected for more precise calibration. In particular, it may be ensured that power ratio minima and maxima based on actual wakes or at least significant wakes are taken into account in the method but noise and other effects are excluded, which otherwise might lead to improper calibration.

According to a second aspect of the invention, the initially stated object is solved by a system comprising means for carrying out the method according to the first aspect of the invention.

The system may be formed by or have as means one or more computers or one or more controllers having a computer. The at least one computer or the at least one controller may be implemented in one or all of the wind turbines of the wind farm or may be located separate from the wind turbines at a location of the wind farm or a location different from the one of the wind farms.

In particular, the system may be the wind farm having the plurality of spatially distributed wind turbines. Accordingly, the wind farm may have as means the one or more computers or the one or more controllers having a computer, which may be implemented in one or all of the wind turbines of the wind farm or may be located separate from the wind turbines at a location of the wind farm or a location different from the one of the wind farms. The one or more computers or the one or more controllers having a computer may be connectable or connected, in particular wirelessly, to at least one, several or all wind turbines of the wind farm or a wind farm controller of the wind farm, which may be connected or connectable, in particular wirelessly, to at least one, several or all wind turbines of the wind farm. Via the connections, respective data, in particular of measured wind directions, generated power and nacelle positions, may be shared.

According to a third aspect of the invention, the initially stated object is solved by a computer program comprising instructions which, when the computer program is executed by a computer, cause the computer to carry out the method according to the first aspect of the invention.

According to a fourth aspect of the invention, the initially stated object is solved by a computer-readable (storage) medium comprising instructions which, when executed by a computer, cause the computer to carry out the method according to the first aspect of the invention. The computer-readable (storage) medium may be part of the controller of the system.

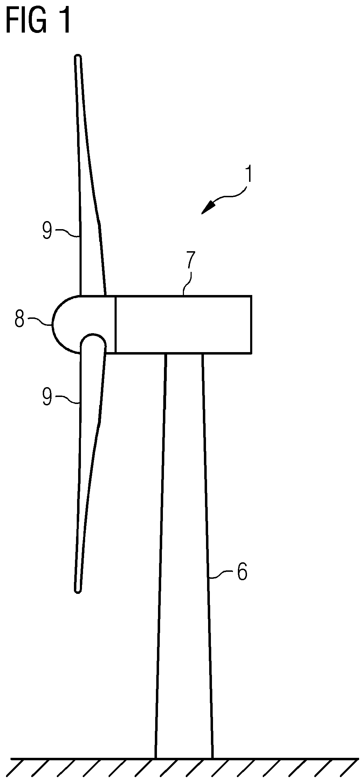

Further advantages, features and details of the invention unfold from the following description, in which by reference to drawings FIGS. 1 to 8 embodiments of the present invention are described in detail. Thereby, the features from the claims as well as the features mentioned in the description can be essential for the invention as taken alone or in an arbitrary combination. In the drawings, there is schematically shown:
- FIG. 1: a side view on a wind turbine for use in a wind farm;
- FIG. 2: a schematic illustration of a wind farm with two wind turbines, a downstream wind turbine experiencing wake from an upstream wind turbine;
- FIG. 3: a schematic illustration of a wind farm with the upstream wind turbine executing a wake steering control operation;
- FIG. 4: a schematic illustration of the wind farm of FIG. 2 and a power ratio graph;
- FIG. 5: a schematic illustration of a further wind farm having five wind turbines;
- FIG. 6: power ratio graphs of three wind turbines of the further wind farm of FIG. 5 being in wake interaction with each other;
- FIG. 7: a schematic illustration of a method or calibrating a nacelle position of a wind turbine in a wind farm; and
- FIG. 8: a schematic illustration of a wind farm having means for carrying out the method of FIG. 7.

Same objects in FIGS. 1 to 8 are denominated with the same reference number. The specific dimensions of features and parts in the figures are exemplary and may be enlarged for ease of reference only.

FIGURE 1 shows a wind turbine 1. The wind turbine 1 comprises a supporting tower 6 and a nacelle 7, whereby the nacelle 7 is attached to the supporting tower 6. The wind turbine 1 further comprises a rotor 8 and a number of wind turbine blades 9 attached thereto. The wind turbine 1 also comprises a yaw system (not shown) for yawing the nacelle 7 relative to the supporting tower 6. By means of the yawing of the nacelle 7, the rotor 8 and wind turbine blades 9 may be positioned for best performance given the wind directions of a current wind. Also, the wind turbine 1 may comprise an anemometer (not shown) for measuring the wind direction of the wind.

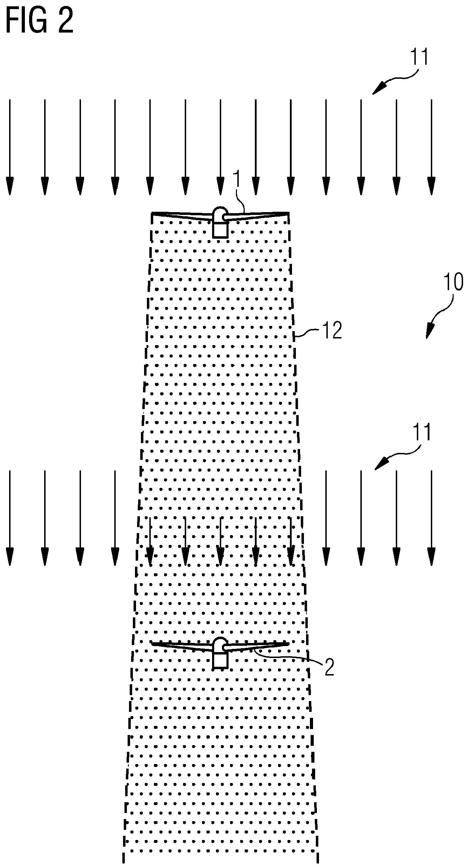

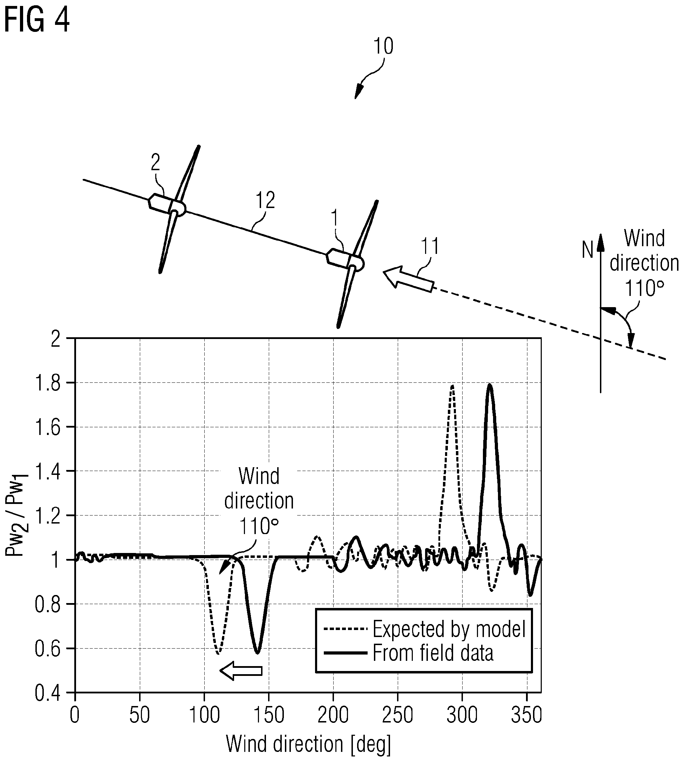

FIGURE 2 shows a schematic illustration of a wind farm 10 with two wind turbines 1, 2 having the design as described with reference to FIG. 1. Although the wind farm 10 of this example is only shown with two wind turbines 1, 2, the number of wind turbines 1, 2 of the wind farm 10 may also be much higher, e.g. at least 5 (see FIG. 4, for example), 10, 20 or more.

Given the wind 11 indicated with its direction by the arrows illustrating the wind 11, the wind turbine 1 is located upstream of the wind turbine 2. Accordingly, the wind turbine 1 may also be referred to as the upstream wind turbine 1 as it is in front of the wind 11. The wind turbine 2, on the other hand, may be referred to as a downstream wind turbine 2 because it is located behind the upstream wind turbine 1 given the current wind direction of the wind 11 represented by the arrows. This designation of upstream and downstream of the wind turbines 1, 2 may change with a shift of direction of the wind 11. In particular, other wind turbines not shown in FIG. 2 may then become upstream and/or downstream of the wind 11 located wind turbines 1, 2.

The upstream wind turbine 1 generates electricity based on the energy of the wind 11 impinging on the upstream wind turbine 1 and causes a wake 12 impinging on the downstream wind turbine 2. In the situation shown in FIG. 2, the downstream wind turbine 2 is fully affected by the wake 12. The wake 12 results in a significantly decreased energy production of the downstream wind turbine 2 compared to the upstream wind turbine 1.

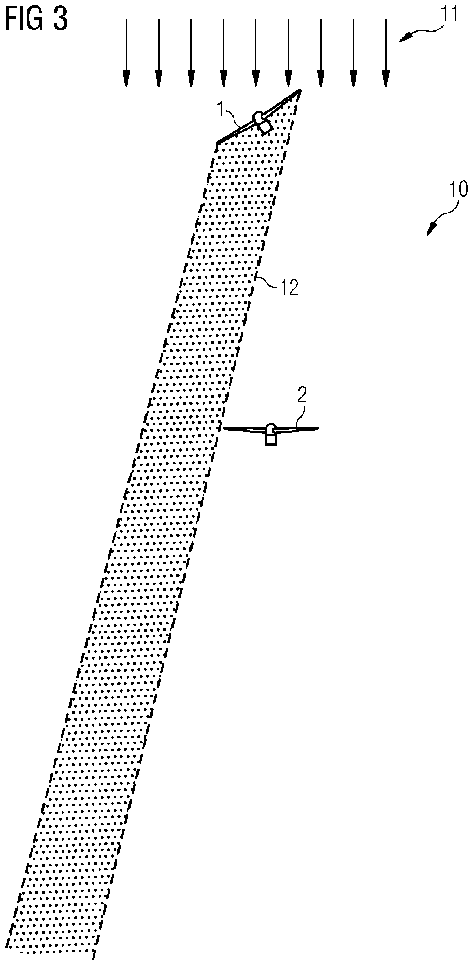

It may be possible to deflect the wake 12 from the downstream wind turbine 2 by means of a wake steering control operation executed by the upstream wind turbine 1. Such situation is shown in FIGURE 3.

In the situation shown in FIG. 3, the yaw system of the upstream wind turbine 1 is misaligned with respect to an optimal positioning into the wind 11 such that the wake 12 may be entirely deflected from the downstream wind turbine 2. Thereby, it may be possible to increase the overall annual energy production of the wind farm 10. However, for best performance, the wake steering control operation requires precise nacelle position data. In other words, a calibration of the nacelle position of the wind turbine 1 must be as precise as possible to increase the performance as much as possible.

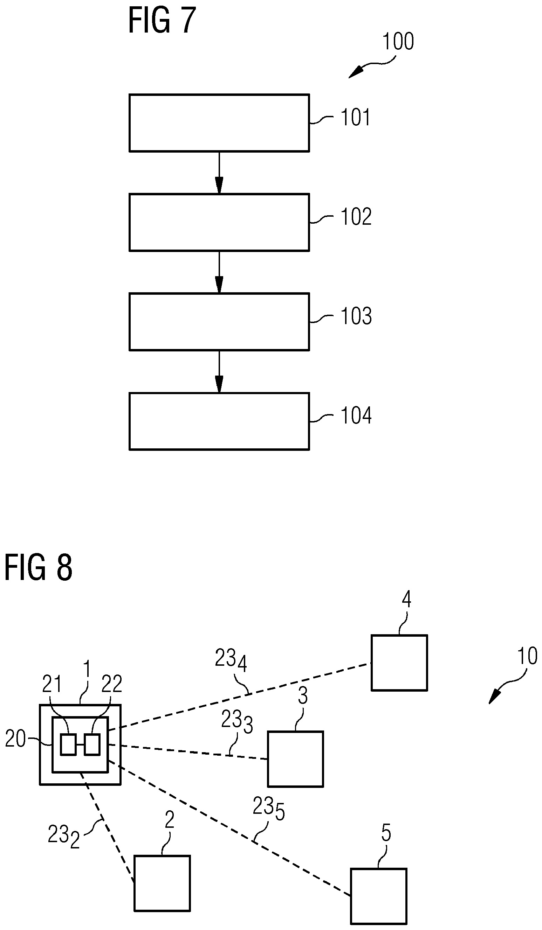

The calibration method, as explained later with reference to FIG. 7 in more detail, uses the power ratios between the downstream wind turbine 2 and the upstream wind turbine 1 for calibrating any one or both of the wind turbines 1, 2 of the wind farm 10 as illustrated in a graph in FIG. 4.

FIGURE 4 shows the wind farm 10 of FIG. 3 with the wake 12 from the upstream wind turbine 1 impinging on the downstream wind turbine 2, or in other words, impacting the downstream wind turbine 2. The wind 11 in this example has a wind direction of 110° when measured in clockwise direction relative to a north direction defined as 0° wind direction as seen in FIG. 4. The calibration performed by the methods presented below may therefore also be referred to as a north calibration.

A method for calibrating the wind turbine 1 in the wind farm 10 is exemplary explained in the following. This method is merely an example based on only two wind turbines 1, 2 of the wind farm 10. However, as explained above, there may be a much higher number of wind turbines and wake effects to consider. Also, more than only one power ratio minimum or power ratio maximum as explained in the following may be considered for recalibrating a precalibrated nacelle position of a wind turbine 1, 2 in a wind farm 10.

When two turbines 1, 2 as shown in FIG. 4 are aligned into the prevailing wind, the wake 12 generated by the upstream or front wind turbine 1 causes a loss of power in the downstream or rear wind turbine 2. The method proposed in the following is based on detecting these situations between nearby wind turbines 1, 2 using operational wind farm data to detect the power losses caused by wakes 11, and compare it with wind farm 10 model predictions.

The power ratio graph beneath the schematic illustration of the wind farm 10 shows two curves corresponding to sets of power ratios as functions of the wind direction from 0° to 360°. The power ratios Pw₂/Pw₁ are the ratio of the power Pw₂ generated by the downstream wind turbine 2 to the power Pw₁ generated by the upstream wind turbine 1. The power ratios may alternatively be the other way around,
i.e., Pw₁/Pw₂.

One of the curves shows a set of power ratios Pw₂/Pw₁ from field data and the other one shows a set of power ratios Pw₂/Pw₁ expected by a model or simulation. The field data power ratios may also be referred to as the computed set of power ratios because these are being computed based on the power that is generated in the field or, in other terms, in operation of the wind turbines 1, 2. On the other hand, the simulation or model power ratios may be referred to as predetermined power ratios because these are based on an upfront simulation of a model of the wind farm 10.

The computed set of power ratios, as may be seen from its respective curve, shows a drop or, in other words, power ratio minimum at a wind direction of approximately 140°. However, the predetermined set of power ratios, as may be seen from its respective curve, shows the power ratio minimum at a wind direction of approximately 110°. This power ratio minimum occurs due to the wake 12 impinging on the downstream wind turbine 2 when the wind 11 impinges on the upstream wind turbine 1 in a direction of 110° as seen in the schematic illustration of the wind farm 10 in FIG. 4.

The field data is false with respect to its wind direction in this case and thereby the computed set of power ratios indicates the respective power ratio minimum falsely at 140° instead of 110°, which is assumed to be correct based on the simulation. Accordingly, there is a wind direction mismatch of -30°. This means that the nacelle position of the upstream wind turbine 1 is wrong by -30° and needs to be corrected by -30°. A recalibration of a precalibrated nacelle position of the wind turbine 1 may be undertaken by adding the wind direction mismatch of -30° to the precalibrated nacelle position and thereby obtain a calibrated nacelle position.

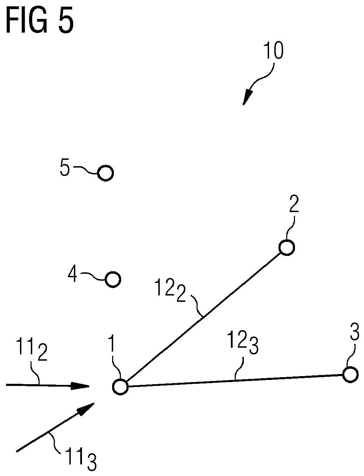

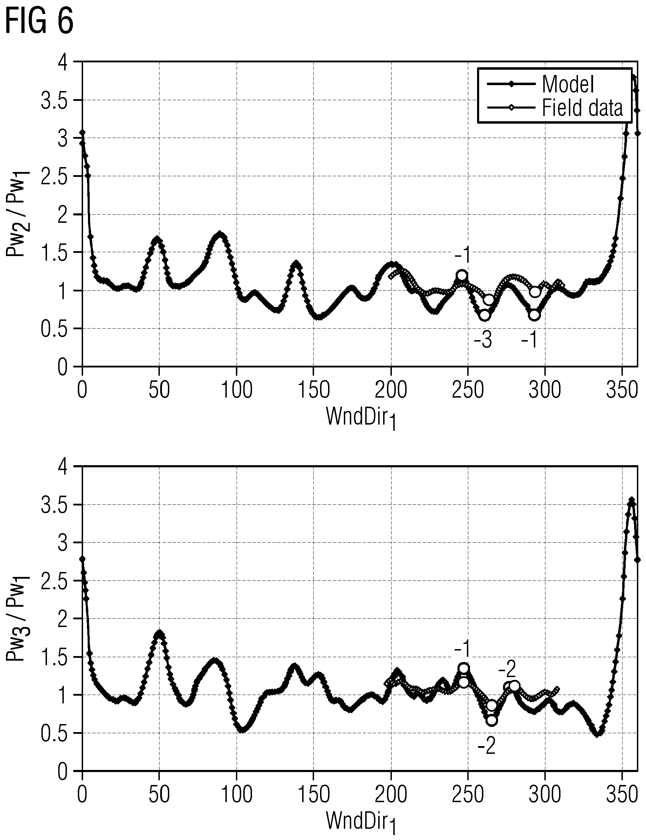

FIGURES 5 and 6 show an example with more wind turbines 1, 2, 3, 4, 5 of the wind farm 10 being spatially distributed from one another in a terrain, which may be a complex terrain. The method described above with reference to FIG. 4 may also be applied to this wind farm 10.

FIG. 5 indicates wind 11₂, 11₃ at two different exemplary wind directions, namely 229,7° for wind 11₃ and 266,6° for wind 11₂. It is known from simulation that these winds 11₂, 11₃ will cause wakes 12₂ and 12₃ at the downwardly of the wind turbine 1 located wind turbines 2 and 3.

FIG. 6 shows the predetermined (model) set of power ratios and the computed (field data) set of power ratios as curves in two separate graphs similar to the illustration of the graph of FIG. 4. The top graph shows the ratio of power generated by the wind turbine 2 to the power generated by the wind turbine 1 as a function of the wind direction measured at the wind turbine 1 (WindDir₁). The bottom graph shows the ratio of power generated by the wind turbine 3 to the power generated by the wind turbine 1 as function of the wind direction measured at the wind turbine 1 (WindDir₁). The computed set of power ratios in both cases has a limited scale of wind directions from approximately 200° to 310° because these are the wind directions of wind 11 occurring in the wind farm 10 of FIG. 5 and thereby measurable in terms of their power generation.

FIGURE 7 schematically shows the steps 101, 102, 103, 104 of a computer-implemented method 100 for calibrating a nacelle position in any one or all of the wind turbines 1, 2, 3, 4, 5 of the wind farm 10 in FIG. 5. The method is based on the power ratio principle as explained with reference to FIG. 4, includes the elements of the calibration method explained with reference to FIG. 4 and will be explained in the following with respect to the wind turbines 1, 2, 3 of FIG. 5 and FIG. 6.

In a first step 101 of the computer-implemented method 100, at least one of the wind turbines 1, 2, 3, 4, 5 is precalibrated. This may be done by trigonometry, using a compass, using data from the wind farm 10 to detect a specific wake 12 or similar. This precalibration does not need to be very accurate.

In a second step 102, a rough calibration of the other wind turbines 1, 2, 3, 4, 5 is performed based on the at least one precalibrated wind turbine 1, 2, 3, 4, 5 of the wind farm 10. In this second step 102, raw nacelle positions of the wind turbines 1, 2, 3, 4, 5 to be calibrated are determined. Then, a correction for each of the determined raw nacelle positions of the wind turbines 1, 2, 3, 4, 5 to be calibrated based on the precalibrated nacelle position of the at least one precalibrated wind turbine 1, 2, 3, 4, 5 is calculated. And, finally, in the second step 102 the computed corrections for each one of the wind turbines 1, 2, 3, 4, 5 to be calibrated are applied, e.g., added or subtracted, to their raw nacelle positions such that the precalibrated nacelle position of the wind turbines 1, 2, 3, 4, 5 to be calibrated are obtained. The rough calibration thereby delivers a roughly calibrated or precalibrated nacelle position for each of the wind turbines 1, 2, 3, 4, 5 in the wind farm 10 if only one or some of the wind turbines 1, 2, 3, 4, 5 are precalibrated.

Once each wind turbine 1, 2, 3, 4, 5 has the precalibration performed, which is supposed to be close to the real nacelle position of each one of the wind turbines 1, 2, 3, 4, 5, a more accurate calibration will be calculated using the power ratio technique explained before. Each wind
turbine 1, 2, 3, 4, 5 will be compared with other closer wind turbines 1, 2, 3, 4, 5, and all the relevant maxima and minima of the power ratio curve in function of wind direction will be compared with the one predicted by a model of the wind farm 10. FIG. 5 and 6 show an example where the wind turbine 1 is being calibrated using wind turbines 2, 3. In this example, six different corrections are needed to match the field data and the model. The more accurate calibration is carried out in the third step 103 of the method 100.

The more accurate calibration performed in step 103 may also be referred to as a thin calibration. For the thin calibration, upstream wind turbines 1, 2, 3, 4, 5 and downstream wind turbines 1, 2, 3, 4, 5 of the wind farm 10 for different wind directions of a wind 11 impinging the upstream wind turbines 1, 2, 3, 4, 5 are determined. For the sake of simplicity, as seen in FIG. 5, only the wind turbine 1 will be considered as upstream wind turbine 1 and the wind turbines 2, 3 will be considered as downstream wind turbines 2, 3 to explain the method 100 by example in the following.

Further, for the thin calibration, the computed (field data) sets of power ratios seen in FIG. 6 are computed for the determined wind turbines 1, 2, 3. In this exemplary case, 1-min (or 10-min) field data samples are binned to create the continuous plot. The computed (field data) set of power ratios in the top graph illustrates the power ratio Pw₂/Pw₁ showing two power ratio minima and one power ratio maximum having a magnitude of at least 0.2 in terms of the power ratio Pw₂/Pw₁ compared to their closest minimum or maximum in the curve or, in other words, computed set of power ratios. In other words, the prominence of the maxima and minima is used, which is the distance between the highest point in a maxima (or lowest in a minima) and the surrounding local extrema. For instance, in FIG. 4 at 110° the prominence is around 0.4 (1-0.6).

Further, in the thin calibration of the third step 103, these power ratio minima and maxima are compared with the power ratio minima and maxima of the predetermined (model) set of power ratios being located in terms of wind direction closest to the wind directions of the power ratio maxima and minima of the computed set of power ratio. A wind direction mismatch between each respective one of the power ratio minima and maxima is identified. This is done by subtracting the respective wind directions of the power ratio minima and maxima of the computed set of power ratios with the respective wind directions of the corresponding power ratio minima and maxima of the predetermined set of power ratios.

As seen in the top graph of FIG. 6, this delivers a wind direction mismatch of -1° for the power ratio maximum, a wind direction mismatch of -3° for the first power ratio minimum and a wind direction mismatch of -1° for the second power ratio minimum.

Similarly, in the bottom graph of FIG. 6, such identification of wind direction mismatches delivers wind direction mismatches of -1°, -2° and -2° for the relevant power ratio minima and maxima.

The identified wind direction mismatches or, in other terms, their values may now be used for recalibrating the precalibrated nacelle position of the wind turbines 1, 2, 3 in the third step 103. For example, a median of the wind direction mismatches identified as described above may be computed as a value for the thin calibration and the median may be added to the roughly calibrated or precalibrated nacelle position of the upstream wind turbine 1 acquired by the rough calibration in step 102. Thereby, a recalibrated or thin calibrated nacelle position of the upstream wind turbine 1 is acquired in step 103.

The recalibrated or thin calibrated nacelle position of the upstream wind turbine 1 is more precise than the precalibrated or roughly calibrated nacelle position but it still may be optimized. For this purpose, a wind direction dependent nacelle position of the wind turbine 1 may be calibrated by means of a wind direction dependent calibration in step 104.

In step 104, the wind turbine 1 is calibrated for a given wind direction by identifying a further wind direction mismatch by comparing a power ratio at the given wind direction in the computed set of power ratios with a power ratio at the given wind direction in the predetermined set of power ratio. This further wind direction mismatch is then added to the calibrated nacelle position of the wind turbine 1 to be calibrated, thereby obtaining the wind direction dependent nacelle position of the wind turbine 1.

For example, the wake 12 generated by wind turbine 1 is expected to affect wind turbine 2 at a wind direction of 229,7°, and wind turbine 3 at a wind direction of 266,6°. It may now happen that wind turbine 2 found the
wake 12 at 228°, and wind turbine 3 at 268° due to terrain effects. In order to artificially match the wind farm 10 data with the model expectations, an additional correction in function of wind direction will be needed with +1.7° applied at 228°, and -1.4° at 268° to get these wind direction dependent nacelle positions. Accordingly, the (absolute) wind direction based on the measured wind direction itself is corrected. The objective of this final correction is to fix the fact that the wake is not where it is expected that it should be.

FIGURE 8 schematically shows a system 10 comprising a controller 20 for carrying out the method 100 according to FIG. 7.

The controller 20 in this example is located in one of the wind turbines 1, 2, 3, 4, 5 and has a computer 21 or computing unit for executing the method 100. The method 100 is carried out when a computer program stored in a computer-readable storage medium 22 of the controller 20 is executed. The computer-readable storage medium 22 may further comprise the simulation data of the predetermined set of power ratios.

The controller 20 may alternatively be located at a distance from the wind turbines 1, 2, 3, 4, 5 within the wind farm 10 or away from the wind farm 10. However, the controller may be physically or wirelessly connected to the wind turbines 1, 2, 3, 4, 5 as seen by means of the connections 23₂, 23₃, 23₄, 23₅.

The controller 20 may by means of the
connections 23₂, 23₃, 23₄, 23₅ receive the respective raw nacelle position, values of generated power of the other wind turbines 2, 3, 4, 5 in the field or operation and if necessary other data as described above for recalibrating the wind turbines 2, 3, 4, 5.

Alternatively, each one of the other wind turbines 2, 3, 4, 5 may have such a controller 20 configured as described above for recalibrating its own nacelle position according to the method 100.

Already installed controllers 20 in wind
turbines 1, 2, 3, 4, 5 may be used, which may also serve other functions of the wind turbines 1, 2, 3, 4, 5, such as controlling the yaw system for the wake steering control operations, may be used.

Table 1 shows an example of results of the method 100 as explained above but carried out for all wind
turbines 1, 2, 3, 4, 5 of a further wind farm 10. Note that the numbers of the nacelle positions are chosen randomly and table 1 is intended to merely explain the method 100 and its results by way of example in more detail.

**Table 1: results of the calibration method 100 carried out for an exemplary wind farm 10 having five wind turbines (WT) 1, 2, 3, 4, 5**

| step | nacelle position | WT 1 | WT 2 | WT 3 | WT 4 | WT 5 |
|---|---|---|---|---|---|---|
| 101 | raw | 125 | 69 | 340 | 2 | 102 |
| 102 | precalibrated | -23 | 33 | -238 | 100 | 0 |
| 103 | recalibration | 1 | -2 | 0 | 1 | 2 |
| | recalibrated | -22 | 31 | -238 | 101 | 2 |
| 104 | wind direction dependent | | | | | |

In step 101, the raw nacelle position of each one of the wind turbines 1, 2, 3, 4 has been determined.

The wind turbine 5 has been precalibrated, and therefore the precalibration in step 102 is carried out based on the precalibrated nacelle position of wind turbine 5. Each raw nacelle position of the wind turbines 1, 2, 3, 4 is subtracted from the precalibrated nacelle position of wind turbine 5 of 102° noted in the row raw nacelle position in table 1.

Then, for the recalibration step 103, the above-described technique of identifying the wind direction mismatches based on the power ratio minima and maxima in the computed and predetermined set of power ratios is carried out for all wake interactions of the wind turbines 1, 2, 3, 4, 5. The median of the identified wind direction mismatches is computed as noted in the row of step 103 of table 1 for each one of the wind turbines 1, 2, 3, 4, 5.

Then, the respectively computed median values are added to their respective precalibrated nacelle positions to get the recalibrated nacelle positions of each wind
turbine 1, 2, 3, 4, 5. These recalibrated nacelle positions are at least on average expected to be more precise than the precalibrated nacelle positions because the simulation of the predetermined set of power ratios is generally expected to be very precise with respect to the location of the wakes, i.e., in terms of the wind directions of the power minima and maxima.

In the further step 104, as explained above, the wind direction dependent nacelle position may be computed for every single wind direction. This row is intentionally left open in table 1 due to its dependance on the specific wind direction of interest.

## Claims

1. Computer-implemented method (100) for calibrating a nacelle position of at least one wind turbine (1, 2, 3, 4, 5) in a wind farm (10) having a plurality of spatially distributed wind turbines (1, 2, 3, 4, 5), whereby the method comprises:
- determining at least one upstream wind
turbine (1, 2, 3, 4, 5) and at least one downstream wind turbine (1, 2, 3, 4, 5) of the wind farm (10), the at least one upstream wind turbine (1, 2, 3, 4, 5) having a wake (12) effect on the at least one downstream wind
turbine (1, 2, 3, 4, 5) for different wind directions of a wind (11) impinging the at least one upstream wind turbine (1, 2, 3, 4, 5),
- computing at least one computed set of power ratios between the at least one downstream wind turbine (1, 2, 3, 4, 5) and the at least one upstream wind turbine (1, 2, 3, 4, 5) for different wind directions,
- identifying at least one wind direction mismatch by comparing at least one power ratio minimum and/or at least one power ratio maximum in the at least one computed set of power ratios with at least one power ratio minimum and/or at least one power ratio maximum in at least one predetermined set of power ratios for the at least one upstream wind turbine (1, 2, 3, 4, 5) and the at least one downstream wind turbine (1, 2, 3, 4, 5), and
- recalibrating a precalibrated nacelle position of at least one wind turbine (1, 2, 3, 4, 5) to be calibrated, the at least one wind turbine (1, 2, 3, 4, 5) to be calibrated being from the at least one downstream wind turbine (1, 2, 3, 4, 5) and the at least one upstream wind turbine (1, 2, 3, 4, 5), whereby the recalibration is based on the identified at least one wind direction mismatch to obtain a calibrated nacelle position of the at least one wind turbine (1, 2, 3, 4, 5) to be calibrated.

2. Method (100) according to claim 1, whereby the at least one computed set of power ratios and/or the at least one predetermined set of power ratios is determined as a function of a range of the different wind directions.

3. Method (100) according to claim 1 or 2, whereby the at least one predetermined set of power ratios is based on a simulation, in particular an upfront simulation.

4. Method (100) according to any of the previous claims, whereby several wind direction mismatches are identified.

5. Method (100) according to claim 4, whereby a measure of central tendency is calculated from the several wind direction mismatches and the precalibrated nacelle position of the at least one wind turbine (1, 2, 3, 4, 5) to be calibrated is recalibrated based on the computed measure of central tendency to obtain the calibrated nacelle position of the at least one wind turbine (1, 2, 3, 4, 5) to be calibrated.

6. Method (100) according to claim 5, whereby a median value or mean value is computed as measure of central tendency.

7. Method (100) according to any of the previous claims, whereby the method (100) further comprises calibrating a wind direction dependent nacelle position of the at least one wind turbine (1, 2, 3, 4, 5) to be calibrated for a given wind direction by the further steps of:
- identifying at least one further wind direction mismatch by comparing at least one power ratio at the given wind direction in the at least one computed set of power ratios with at least one power ratio at the given wind direction in the at least one predetermined set of power ratios,
- adding the identified further wind direction mismatch to the calibrated nacelle position of the at least one wind turbine (1, 2, 3, 4, 5) to be calibrated, thereby obtaining the wind direction dependent nacelle position of the at least one wind turbine (1, 2, 3, 4, 5) to be calibrated.

8. Method (100) according to claim 7, whereby the at least one power ratio for the given wind direction is located between a power ratio minimum and a power ratio maximum of the computed set of power ratios, and an interpolation is performed for identifying the further wind direction mismatch.

9. Method (100) according to any of the previous claims, whereby the method further comprises precalibrating the nacelle position of the at least one wind
turbine (1, 2, 3, 4, 5) to be calibrated based on a precalibrated nacelle position of at least one precalibrated wind turbine (1, 2, 3, 4, 5) of the wind farm (10).

10. Method (100) according to claim 9, the precalibration of the nacelle position of the at least one wind turbine (1, 2, 3, 4, 5) to be calibrated having the steps of:
- determining a raw nacelle position of the at least one wind turbine (1, 2, 3, 4, 5) to be calibrated,
- determining a precalibrated nacelle position of at least one precalibrated wind turbine (1, 2, 3, 4, 5) of the wind farm (10),
- computing a correction for the raw nacelle position of the at least one wind turbine (1, 2, 3, 4, 5) to be calibrated based on the precalibrated nacelle position of the at least one precalibrated wind turbine (1, 2, 3, 4, 5), and
- applying the computed correction to the raw nacelle position of the at least one wind turbine (1, 2, 3, 4, 5) to be calibrated such that the precalibrated nacelle position of the at least one wind turbine (1, 2, 3, 4, 5) to be calibrated is obtained.

11. Method (100) according to any of the previous claims, whereby the at least one power ratio maximum and/or the at least one power ratio minimum in the at least one computed set of power ratios and/or the at least one predetermined set of power ratios is of a magnitude of at least 0.1, in particular of at least 0.2, from an adjacent minimum and/or maximum of the at least one computed set of power ratios and/or the at least one predetermined set of power ratios.

12. System (10) comprising means (20) for carrying out the method (100) of any of the previous claims.

13. System (10) according to claim 12, whereby the system (10) is a wind farm (10) having a plurality of spatially distributed wind turbines (1, 2, 3, 4, 5).

14. Computer program comprising instructions, which, when the computer program is executed by a computer (21), cause the computer (21) to carry out the method (100) of any of claims 1 to 11.

15. Computer-readable medium (22) comprising instructions which, when executed by a computer (21), cause the computer to carry out the method of any of claims 1 to 11.
